# EUROPÄISCHE PATENTSCHRIFT

(11) **EP 0 929 433 B1**
(45) Veröffentlichungstag und Bekanntmachung des Hinweises auf die Patenterteilung: **06.08.2003**
(21) Anmeldenummer: 98917820.7
(22) Anmeldetag: 30.04.1998
(51) Int. Cl.: B61G 11/16, F16F 7/12, F16F 1/44, B60R 19/18

(54) **VERFAHREN UND VORRICHTUNG ZUR ENTZIEHUNG VON STOSSENERGIE INSBESONDERE IN SELBSTTÄTIGEN KUPPLUNGEN VON SCHIENENFAHRZEUGEN**
PROCESS AND DEVICE FOR ABSORBING IMPACT ENERGY, IN PARTICULAR IN AUTOMATIC COUPLINGS OF RAIL VEHICLES
PROCEDE ET DISPOSITIF POUR ABSORBER L'ENERGIE DE CHOCS, NOTAMMENT DANS DES ATTELAGES AUTOMATIQUES DE VEHICULES SUR RAILS

(30) Priorität: 30.04.1997 PL 31979997
(43) Veröffentlichungstag der Anmeldung: 21.07.1999
(73) Patentinhaber: Fabryka Urzadzen Mechanicznych Kamax S.A., 37-220 Kanczuga (PL)
(72) Erfinder: KUBICKI, Antoni, PL-37-200 Przeworsk (PL); STRZYZ, Eugeniusz, PL-37-100 Ropczyce (PL); CHMIELEWSKI, Andrzej, PL-37-200 Przeworsk (PL); KEDZIOR, Jozef, PL-01-884 Warszawa (PL); POPLAWSKI, Wojciech, PL-03-966 Warszawa (PL); MILCZARSKI, Kazimierz, PL-00-559 Warszawa (PL); MICHAKOW, Wladimir Maksymowicz, Moscow, 117418 (RU); FILIPOW, Wiktor Nikolajewicz, Moscow, 127322 (RU); DIMITROW, Walentin Wiktorowicz, Moscow (RU); SKURATOW, Aleksander Jewgieniewicz, Moscow, 111531 (RU); CURIENKO, Wladimir Nikolajewicz, Szczerbinka, 142002 (RU); ULIANOW, Oleg Aleksandrowicz, Mendelejewo, 141570 (RU)
(74) Vertreter: Grünecker, Kinkeldey, Stockmair & Schwanhäusser Anwaltssozietät
(86) Internationale Anmeldenummer: PL9800020
(87) Internationale Veröffentlichungsnummer: WO98049042

(56) Entgegenhaltungen:
- DE-A- 2 722 542
- DE-A- 3 610 567
- DE-A- 4 419 042
- DE-A- 19 616 944
- GB-A- 1 041 912
- US-A- 3 752 462
- US-A- 4 960 215
- US-A- 4 998 997

## Beschreibung

Die Erfindung betrifft ein Verfahren und eine Vorrichtung zur Entziehung von Stoßenergie insbesondere in selbsttätigen Kupplungen von Schienenfahrzeugen.

In den bekannten, einen Elastomer-Stoßdämpfer aufweisenden Vorrichtungen zur Stoßenergieentziehung findet die Absorption der Stoßenergie in einem Arbeitszylinder statt, der mit einem flüssigen, vorverdichteten Elastomer angefüllt ist. Das geschieht im Inneren des Arbeitszylinders, während der Bewegung einer Kolbenstange des Elastomer-Stoßdämpfers, die durch die äußere Kraft verursacht ist. Die Bewegung der Kolbenstange findet erst nach dem Überwinden einer Eigenspannung des Elastomer-Stoßdämpfers statt und geht dann proportional zu der wirkenden Kraft vor.

Aus einer polnischen Gebrauchsmusteranmeldung W 97130 ist eine, einen Elastomer-Stoßdämpfer aufweisende Vorrichtung zur Stoßenergieentziehung in einer selbsttätigen Kupplung von Schienenfahrzeugen bekannt. Der Apparat ist so aufgebaut, daß in einem Körper, der in Form eines einseitig mit Hilfe eines Bodens geschlossenen Zylinders ausgebildet ist, ein Elastomer-Stoßdämpfer eingesetzt ist. Der Elastomer-Stoßdämpfer ist mit seinem Kolben in die Richtung des Körperbodens ausgerichtet und mit Hilfe einer Stoßplatte zum Boden angedrückt. Die Stoßplatte ist mit dem Körper mit Hilfe von fest an der Stoßplatte eingesetzten Schrauben verbunden. Die Schrauben gehen über Schraubenlöcher, die sich in den gegenüber dem Körperboden liegenden Körperösen befinden.

Nachteilig bei dieser Lösung ist, daß der Arbeitsbereich der Vorrichtung beschränkt ist, denn eine relativ große Eigenspannung des Elastomer-Stoßdämpfers ist notwendig.

Die Aufgabe der Erfindung besteht darin, ein Verfahren und eine Vorrichtung zur Entziehung von Stoßenergie insbesondere in einer selbsttätigen Kupplung von Schienenfahrzeugen zu schaffen, die die Entziehung von Stoßenergie unter unterschiedlichen Arbeitsbedingungen ermöglichen. Dank dem Verfahren und der Vorrichtung können die Stöße herabgesetzt werden, die eine kleine Stoßenergie aufweisen, und die, die eine Stoßenergie bis hin zu dem maximal zulässigen Grenzwert haben.

Das erfindungsgemäße Verfahren besteht darin, daß beim Anstieg einer länglich auf eine einen Elastomer-Stoßdämpfer aufweisende Vorrichtung wirkenden Kraft, und zwar vom Nullwert bis zum Ausgleichen einer ursprünglichen Eigenspannung der Vorrichtung, zuerst keine Längenverringerung der Vorrichtung stattfindet. Bei einem anschließenden Anstieg der Kraft, findet eine Längenverringerung der Vorrichtung bis zum ersten vorbestimmten Längshub statt, wobei die Längenverringerung durch die Einschiebung der, einen kleinen Durchmesser aufweisenden Kolbenstange in den Arbeitszylinder des Elastomer-Stoßdämpfers bewirkt ist. Bei einem anschließenden Anstieg der Kraft bis zum Ausgleichen einer zusätzlichen Eigenspannung der Vorrichtung, findet keine Längenverringerung der Vorrichtung statt. Nach dem Ausgleichen der zusätzlichen Eigenspannung der Vorrichtung und bei einem anschließenden Anstieg der Kraft bis zu einem maximalen Wert, findet eine weitere Längenverringerung der Vorrichtung statt, bis zum Erreichen eines gesamten vorbestimmten Längshubes der Vorrichtung, wobei die

Längenverringerung durch die Einschiebung der, einen großen Durchmesser aufweisenden, Kolbenstange in den Arbeitszylinder bewirkt ist. Bei einem Abfall der Kraft vom maximalen Wert, findet eine erste sprunghafte Abnahme der Gegenkraft der Vorrichtung statt, ohne Längenveränderung. Bei einem anschließenden Abfall der Kraft, findet eine Längenvergrößerung der Vorrichtung statt, bis zum Erreichen des ersten Längshubes, wobei die Längenvergrößerung durch das Ausfahren der, einen großen Durchmesser aufweisenden Kolbenstange aus dem Arbeitszylinder bewirkt ist. Bei einem anschließenden Abfall der Kraft, findet eine zweite sprunghafte Abnahme der Gegenkraft der Vorrichtung statt, und zwar ohne Längenveränderung. Bei einem weiteren anschließenden Abfall der Kraft, findet eine weitere Längenvergrößerung der Vorrichtung statt, bis zum Erreichen ihrer ursprünglichen Länge, wobei die Längenvergrößerung durch das Ausfahren der, einen kleinen Durchmesser aufweisenden, Kolbenstange aus dem Arbeitszylinder bewirkt ist. Bei einem anschließenden Abfall der Kraft bis zum Nullwert und beim Erhalten ihrer ursprünglichen Länge findet eine Abnahme der Gegenkraft der Vorrichtung statt.

Die erfindungsgemäße Vorrichtung zur Entziehung von Stoßenergie ist dadurch gekennzeichnet, daß sie aus einem Körper, einer Stoßplatte und einem Elastomer-Stoßdämpfer besteht. Der Elastomer-Stoßdämpfer weist zwei Kolbenstangen unterschiedlichen Durchmessers in einem gemeinsamen Arbeitszylinder auf. Die Kolbenstange mit dem kleinen Durchmesser liegt an dem Boden des Körpers an, und der Boden des Elastomer-Stoßdämpfers stößt an die Stoßplatte an.

Die Erfindung ist nachstehend anhand der beigefügten Zeichnungen erläutert.

Es zeigt:
Fig. 1 Kennlinien der Vorrichtung, welche das beanspruchte Verfahren darstellen,
Fig.2 die Vorrichtung zur Entziehung der Stoßenergie, enthaltend einen Elastomer-Stoßdämpfer mit zwei Kolbenstangen in einem gemeinsamen Arbeitszylinder.

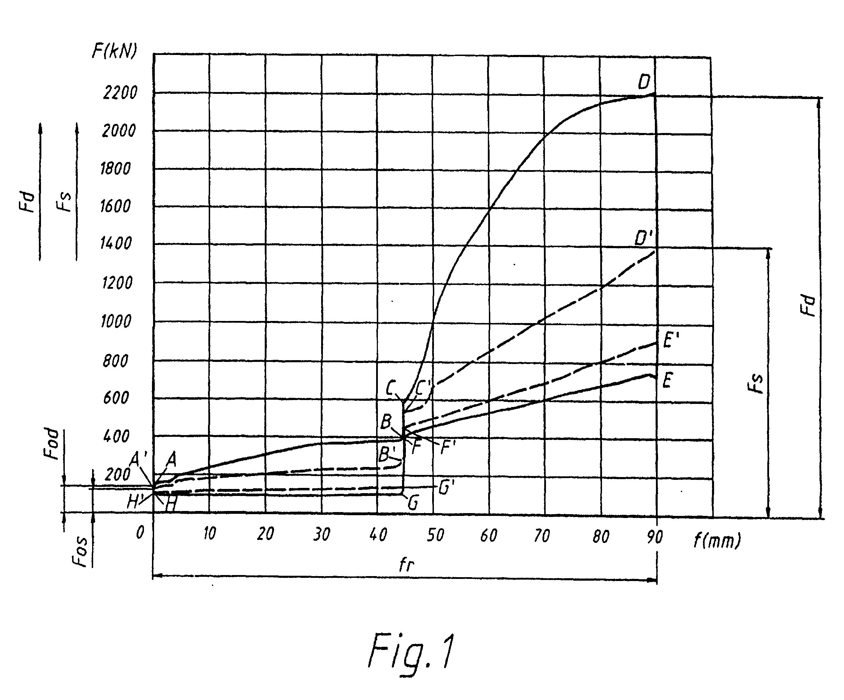

An zwei Beispielen aus der Praxis, welche die in der Fig.1 gezeigten Kennlinien der Vorrichtung beschreiben, mag die erfindungsgemäße Entziehung der Stoßenergie verdeutlicht werden.

### Beispiel 1

Während des Auflaufs eines 90 Tonnen schweren Waggons mit einer Geschwindigkeit von 11 km/h auf einen anderen stehenden, nicht abgebremsten Waggon entsteht eine äußere, steigende Kraft F_{d}, die auf die Vorrichtung länglich wirkt. Diese Kraft, nach dem Überwinden einer ursprünglichen Eigenspannung der Vorrichtung F_{od} von 140 kN, (Fig.1, Punkt A), verursacht eine zu der anstoßenden Kraft proportionale Längenverringerung der Vorrichtung. Diese Längenverringerung ist auf der Linie A-B in Fig. 1 gezeigt, und ist durch die Einschiebung einer, einen kleinen Durchmesser aufweisenden Kolbenstange in einen Arbeitszylinder des Elastomer-Stoßdämpfers bewirkt. Im Punkt B in Fig.1, d.h. bei der Kraft F_{d} von etwa 400 kN, erreicht die Kolbenstange das Ende ihres Hubwegs, den sogenannten ersten Längshub. Der weitere Anstieg der Kraft F_{d} bis zum Wert von 600 kN im Punkt C in Fig.1 bewirkt keine Längenverringerung der Vorrichtung mehr, sondern lediglich die Überwindung einer zusätzlichen Eigenspannung der Vorrichtung. Nach dem Überwinden der Eigenspannung findet eine weitere, zu der anstoßenden Kraft proportionale Längenverringerung der Vorrichtung statt, die auf der Linie C-D in Fig. 1 gezeigt ist. Sie ist durch die Einschiebung einer, einen großen Durchmesser aufweisenden, Kolbenstange in den Arbeitszylinder des Elastomer-Stoßdämpfers verursacht. Dem Punkt D in Fig. 1 entspricht ein maximaler Wert der Kraft F_{d} von 2200 kN und eine maximale Längenverringerung fᵣ. Sie ist der gesamte vorbestimmte Längshub der Vorrichtung. Bei der Verminderung der äußeren Kraft F_{d} findet eine sprunghafte Abnahme der Gegenkraft der Kolbenstange mit dem größeren Durchmesser statt. Das geschieht bis zum, mit dem Punkt E in Fig.1 bezeichneten Wert von 700 kN, ohne eine Änderung der Länge der Vorrichtung zu verursachen. Danach findet ein zu der Verminderung der äußeren Kraft proportionales Ausfahren der Stange mit dem größeren Durchmesser aus dem Arbeitszylinder statt, und zwar zu ihrer ursprünglichen Lage. Die Lage ist durch Punkt F in Fig.1 und die ihm entsprechende äußere Kraft von etwa 420 kN bezeichnet. Bei einer weiteren Verminderung der Kraft findet zuerst eine sprunghafte Entlastung der Kolbenstange mit dem kleineren Durchmesser statt, und zwar bis zum mit dem Punkt G in Fig.1 bezeichneten Wert von 120 kN. Anschließend beginnt eine, zu der Verminderung der äußeren Kraft proportionale Versetzung der Stange mit dem kleineren Durchmesser zu ihrer ursprünglichen Lage. Sie entspricht dem Punkt H und der äußeren Kraft von etwa 100 kN. Bei einem anschließenden Abfall der Kraft bis zum Nullwert und beim Erhalten ihrer ursprünglichen Länge findet eine Abnahme der Gegenkraft der Vorrichtung statt.

### Beispiel 2

Bei einer, einer statischen Einwirkung ähnlichen Geschwindigkeit der Belastung und der Entlastung der Vorrichtung von 0.01 m/s, entsteht eine äußere, steigende Kraft F_{d.}, die auf die Vorrichtung länglich wirkt. Diese Kraft verursacht, nach dem Überwinden einer ursprünglichen Eigenspannung der Vorrichtung Fₒₛ von 120 kN, (Fig.1, Punkt A'), eine zu der anstoßenden Kraft proportionale Längenverringerung der Vorrichtung. Diese Längenverringerung ist auf der Linie A'-B' in Fig. 1 gezeigt, und durch die Einschiebung einer, einen kleineren Durchmesser aufweisenden Kolbenstange im Arbeitszylinder des Elastomer-Stoßdämpfers bewirkt. Im Punkt B' in Fig.1, d.h. bei der Kraft Fₛ von etwa 250 kN, erreicht die Kolbenstange das Ende ihres Hubwegs. Der weitere Anstieg der Kraft Fₛ bis zum Wert von 550 kN im Punkt C' in Fig. 1 verursacht keine Längenverringerung der Vorrichtung mehr, sondern lediglich die Überwindung einer zusätzlichen Eigenspannung der Vorrichtung. Nach dem Überwinden der Eigenspannung findet eine weitere, zu der anstoßenden Kraft proportionale Längenverringerung der Vorrichtung statt, die auf der Linie C'-D' in Fig.1 gezeigt ist. Sie ist durch die Einschiebung einer, einen größeren Durchmesser aufweisenden Kolbenstange in den Arbeitszylinder des Elastomer-Stoßdämpfers verursacht. Dem Punkt D' in Fig.1 entspricht ein maximaler Wert der Kraft Fₛ von 1400 kN und eine maximale Längenverringerung fᵣ der Vorrichtung. Sie ist der zweite vorbestimmte Längshub der Vorrichtung. Bei einer weiteren Verminderung der äußeren Kraft Fₛ findet zuerst eine sprunghafte Entlastung der Kolbenstange mit dem größeren Durchmesser statt, und zwar bis zum mit dem Punkt E' in Fig.1 bezeichneten Wert von 900 kN. Dabei findet keine Änderung der Lange der Vorrichtung statt. Danach beginnt eine zu der Verminderung der äußeren Kraft proportionale Versetzung der Stange mit dem größeren Durchmesser zu ihrer ursprünglichen Lage. Die Lage entspricht dem Punkt F' in Fig.1 und der ihm entsprechenden äußeren Kraft von etwa 450 kN. Bei einer weiteren Verminderung der Kraft findet zuerst eine sprunghafte Entlastung der Kolbenstange mit dem kleineren Durchmesser statt, und zwar bis zum mit dem Punkt G' in Fig.1 bezeichneten Wert von 140 kN. Anschließend beginnt eine zu der Verminderung der äußeren Kraft proportionale Versetzung der Stange zu ihrer ursprünglichen Lage statt, die dem Punkt H' entspricht. Bei einem anschließenden Abfall der Kraft bis zum Nullwert und beim Erhalten ihrer ursprünglichen Länge, findet eine Abnahme der Gegenkraft der Vorrichtung statt.

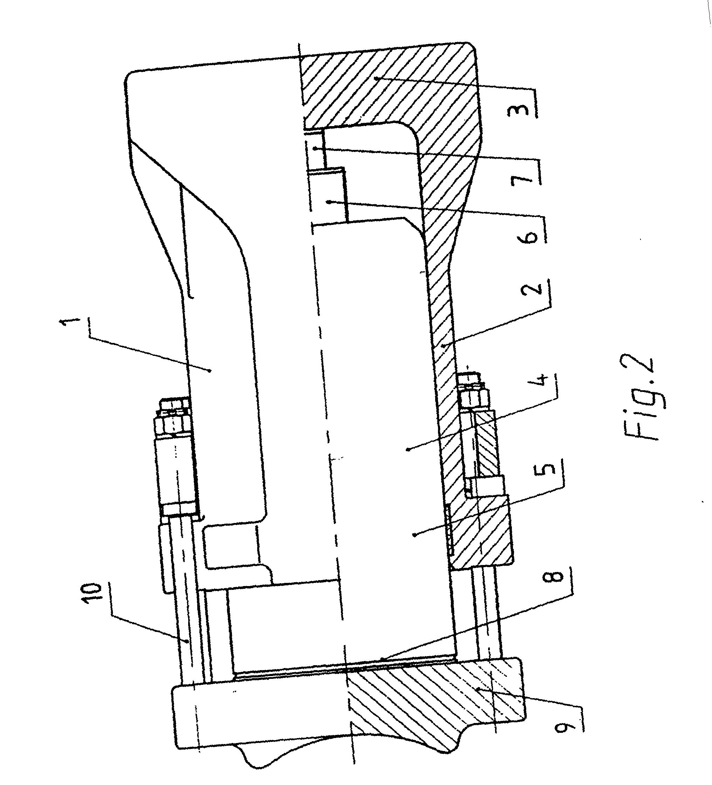

Das Verfahren nach der Erfindung läßt eine neue Kennlinie einer Vorrichtung zur Entziehung der Stoßenergie herbeiführen, die den Einsatz der Vorrichtung unter unterschiedlichen Arbeitsbedingungen ermöglicht. Die neuen Kennlinien der Vorrichtung weisen für kleine Werte von äußeren Stoßkräften eine große Steigung des Hubweges gegenüber der Stoßkraft aus. Für große Werte von äußeren Stoßkräften ist die Steigung des Hubweges deutlich kleiner.
Ein in Fig.2 gezeigtes Beispiel einer Vorrichtung zur Durchführung des Verfahrens zur Entziehung der Stoßenergie weist einen Körper 1 aus, der aus einer Hülse 2 und einem Boden 3 besteht. Im Inneren des Körpers ist ein Elastomer-Stoßdämpfer 4 gleitend gegenüber dem Körper angeordnet. Die, einen großen Durchmesser aufweisende Kolbenstange 6 ragt nach Außen vom Arbeitszylinders 5 des Elastomer-Stoßdämpfers heraus. In der Kolbenstange 6 ist eine andere Kolbenstange 7 mit einem kleinen Durchmesser ineinanderverschiebbar angeordnet. Die Kolbenstange mit dem kleinen Durchmesser 7 liegt an den Boden des Körpers an und der Boden 8 vom Elastomer-Stoßdämpfer liegt an die Innenseite einer Stoßplatte 9 an. Die Stoßplatte ist mit dem Körper mit Hilfe von Verbindungsstücken 10 verbunden.

Wird die erfindungsgemäße Vorrichtung mit einer äußeren, länglich wirkenden und ansteigenden Kraft belastet, wird - nach dem Überwinden der ursprünglichen Eigenspannung der Vorrichtung - ihre Länge, aufgrund der Einschiebung der Kolbenstange 7 in den Arbeitszylinder 5, verringert. Wird das Ende ihres Hubweges erreicht, überwiegt die äußere Kraft zuerst die zusätzliche Eigenspannung der Vorrichtung und dann findet eine weitere Längenverringerung der Vorrichtung statt. Die Längenverringerung ist durch die Einschiebung der Kolbenstange 6 mit dem größeren Durchmesser in den Arbeitszylinder 5 verursacht, und sie dauert bis die Kolbenstange 6 das Ende ihres Hubweges erreicht hat. Bei der Verminderung der äußeren Kraft vom maximalen Wert findet zuerst eine sprunghafte Entlastung der Kolbenstange 6 mit dem größeren Durchmesser statt, die keine Versetzung der Stange, d.h. keine Änderung der Länge der Vorrichtung verursacht. Danach beginnt ein zu der weiteren Verminderung der äußeren Kraft proportionales Ausfahren der Stange 6 zu ihrer ursprünglichen Länge. Bei einer weiteren Verminderung der Kraft findet wieder eine sprunghafte Entlastung der Kolbenstange 7 mit dem kleineren Durchmesser statt, die keine Versetzung der Stange verursacht und dann beginnt ein Ausfahren der Stange 7 aus dem Arbeitszylinder 5 zu ihrer ursprünglichen Länge. Bei einem anschließenden Abfall der Kraft bis zum Nullwert und beim Erhalten ihrer ursprünglichen Länge, findet eine Abnahme der Gegenkraft der Vorrichtung statt.

## Patentansprüche

1. Verfahren zur Entziehung von Stoßenergie mit Hilfe einer Vorrichtung mit einem Elastomer-Stoßdämpfer, der zwei in einem gemeinsamen Arbeitszylinder angeordnete Kolbenstangen mit verschiedenen Durchmessern aufweist, insbesondere in selbsttätigen Kupplungen bei Schienenfahrzeugen, bestehend in der Entziehung der Stoßenergie durch Überwindung des Strömungswiderstandes in einem flüssigen, zusammendrückbaren und vorverdichteten Elastomer, **dadurch gekennzeichnet, daß** bei einer länglich auf die Vorrichtung wirkenden Kraft die Entziehung der Stoßenergie in den folgenden Schritten stattfindet:
a. daß die Vorrichtung, beim Anstieg der Kraft vom Nullwert bis zum Ausgleichen einer ursprünglichen Eigenspannung der Vorrichtung, eine ursprüngliche Länge aufweist;
b. daß, bei einem anschließenden Anstieg der Kraft, eine Längenverringerung der Vorrichtung, bis zum ersten vorbestimmten Längshub, stattfindet, wobei die Längenverringerung durch die Einschiebung der, einen kleinen Durchmesser aufweisenden, Kolbenstange (7) in den Arbeitszylinder (5) des Elastomer-Stoßdämpfers bewirkt ist;
c. daß, bei einem anschließenden Anstieg der Kraft bis zum Ausgleichen einer zusätzlichen Eigenspannung der Vorrichtung, keine Längenverringerung der Vorrichtung stattfindet;
d. daß, nach dem Ausgleichen der zusätzlichen Eigenspannung der Vorrichtung und bei einem anschließenden Anstieg der Kraft bis zu einem maximalen Wert, eine weitere Längenverringerung der Vorrichtung, bis zum gesamten vorbestimmten Längshub der Vorrichtung, stattfindet, wobei die Längenverringerung durch die Einschiebung der, einen großen Durchmesser aufweisenden, Kolbenstange (6) in den Arbeitszylinder (5) bewirkt ist;
e. daß, bei emem Abfall der Kraft vom maximalen Wert, eine erste sprunghafte Abanhme-der Gegenkraft der Vorrichtung, ohne Längenveränderung, stattfindet;
f daß, bei einem anschließenden Abfall der Kraft, eine Längenvergrößerung der Vorrichtung, bis zum ersten Längshub stattfindet, wobei die Längenvergrößerung durch das Ausfahren der, einen großen Durchmesser aufweisenden, Kolbenstange (6) aus dem Arbeitszylinder (5) bewirkt ist;
g. daß, bei einem anschließenden Abfall der Kraft, eine zweite sprunghafte Abnahme der Gegenkraft der Vorrichtung, ohne Längenveränderung, stattfindet;
h. daß, bei einem anschließenden Abfall der Kraft, eine weitere Längenvergrößerung der Vorrichtung, bis zum Erreichen ihrer ursprünglichen Länge, stattfindet, wobei die Längenvergrößerung durch das Ausfahren der, einen kleinen Durchmesser aufweisenden, Kolbenstange (7) aus dem Arbeitszylinder (5) bewirkt ist;
i. daß, bei einem anschließenden Abfall der Kraft bis zum Nullwert und beim Erhalten ihrer ursprünglichen Länge, eine Abnahme der Gegenkraft der Vorrichtung stattfindet.

2. Vorrichtung zur Entziehung von Stoßenergie, insbesondere in selbsttätigen Kupplungen von Schienenfahrzeugen, bestehend aus einem Körper in Form einer mit Hilfe eines Bodens einseitig abgeschlossenen Hülse und einer Stoßplatte, die gegenüber dem Körper verschiebbar angeordnet ist, sowie aus einem zwischen der Stoßplatte und dem Boden des Körpers angeordneten Elastomer-Stoßdämpfer, **dadurch gekennzeichnet, daß** der Elastomer-Stoßdämpfer (4) zwei in einem gemeinsamen Arbeitszylinder (5) angeordnete Kolbenstangen mit verschiedenen Durchmessern aufweist, wobei die Kolbenstange (7) mit einem kleinen Durchmesser an den Boden (3) des Körpers (1) mit ihrem Ende anliegt und der Boden (8) des Elastomer-Stoßdämpfers (4) an die Stoßplatte (9) anstößt.

## Claims

1. Method of extracting impact energy with the aid of a device having an elastomer-type shock-absorber which has two piston rods with different diameters disposed in a common working cylinder, particularly in automatic couplings in rail vehicles, the said method consisting in extracting the impact energy by overcoming the flow resistance in a fluid, compressible and precompacted elastomer, **characterised in that**, when there is a force acting longitudinally upon the device, the extraction of the impact energy takes place in the following steps:
a. that the device has an original length when there is a rise in the force from the zero value until an original inherent tension of the device is counterbalanced;
b. that, when there is a subsequent rise in the force, a reduction in the length of the device as far as the first predetermined longitudinal stroke takes place, the said reduction in length being brought about by the pushing-in, into the working cylinder (5) of the elastomer-type shock-absorber, of the piston rod (7) having a small diameter;
c. that, in the event of a subsequent rise in the force until an additional inherent tension of the device is counterbalanced, no reduction in the length of the device takes place;
d. that, after the counterbalancing of the additional inherent tension and when there is a subsequent rise in the force as far as a maximum value, a further reduction in the length of the device as far as the total predetermined longitudinal stroke of the device takes place, the said reduction in length being brought about by the pushing-in, into the working cylinder (5), of the piston rod (6) having a large diameter;
e. that, when there is a decline in the force from the maximum value, a first, sudden decrease in the counterforce of the device takes place, without any change in length;
f. that, when there is a subsequent decline in the force, an increase in the length of the device as far as the first longitudinal stroke takes place, the said increase in length being brought about by the extension, out of the working cylinder (5), of the piston rod (6) having a large diameter;
g. that, when there is a subsequent decline in the force, a second, sudden decrease in the counterforce of the device takes place, without any change in length;
h. that, when there is a subsequent decline in the force, a further increase in the length of the device takes place until its original length is reached, the said increase in length being brought about by the extension, out of the working cylinder (5), of the piston rod (7) having a small diameter;
i. that, when there is a subsequent decline in the force as far as the zero value, and when the original length of the device is obtained, a decrease in the counterforce of the said device takes place.

2. Device for extracting impact energy, particularly in automatic couplings of rail vehicles, the said device consisting of a body in the form of a sleeve which is closed on one side with the aid of a base and an impact plate which is disposed so as to be displaceable in relation to the said body, and also of an elastomer-type shock-absorber disposed between the impact plate and the base of the body, **characterised in that** the elastomer-type shock-absorber (4) has two piston rods with different diameters disposed in a common working cylinder (5), the piston rod (7) with a small diameter resting against the base (3) of the body (1) with its end, and the base (8) of the elastomer-type shock-absorber (4) abutting against the impact plate (9).

## Revendications

1. Procédé d'élimination de l'énergie de choc à l'aide d'un dispositif comprenant un absorbeur de choc en élastomère, qui comprend deux bielles de piston présentant différents diamètres et disposées dans un cylindre de travail commun, en particulier dans des embrayages automatiques de véhicules sur rails, consistant à éliminer l'énergie de choc en surmontant la résistance hydraulique dans un élastomère liquide, compressible et suralimenté, **caractérisé en ce que** par une force agissant longitudinalement sur le dispositif, l'élimination de l'énergie de choc a lieu selon les étapes suivantes :
a. le dispositif, lors de l'augmentation de la force depuis la valeur zéro jusqu'à la compensation d'une contrainte propre originelle du dispositif, présente une longueur originelle ;
b. lors d'une augmentation suivante de la force, une diminution de la longueur du dispositif a lieu jusqu'au premier mouvement longitudinal prédéterminé, moyennant quoi la diminution de la longueur est effectuée par insertion de la bielle de piston (7), présentant un petit diamètre, dans le cylindre de travail (5) de l'absorbeur de choc en élastomère ;
c. lors d'une augmentation suivante de la force jusqu'à la compensation d'une contrainte propre additionnelle du dispositif, aucune diminution de la longueur du dispositif n'a lieu ;
d. après la compensation de la contrainte propre additionnelle du dispositif et lors d'une augmentation suivante de la force jusqu'à une valeur maximale, une autre diminution de la longueur du dispositif a lieu, jusqu'à l'ensemble du mouvement longitudinal prédéterminé du dispositif, moyennant quoi la diminution de la longueur est effectuée par insertion de la bielle de piston (6), présentant un grand diamètre, dans le cylindre de travail (5) ;
e. lors d'une chute de la force depuis la valeur maximale, une première réduction brusque de la force antagoniste du dispositif a lieu, sans modification de la longueur ;
f. lors d'une chute suivante de la force, une augmentation de la longueur du dispositif a lieu jusqu'au premier mouvement longitudinal, moyennant quoi l'augmentation de la longueur est effectuée en sortant la bielle de piston (6), présentant un grand diamètre, du cylindre de travail (5) ;
g. lors d'une chute suivante de la force, une seconde réduction brusque de la force antagoniste du dispositif a lieu, sans modification de longueur ;
h. lors d'une chute suivante de la force, une autre augmentation de la longueur du dispositif a lieu jusqu'à ce qu'il ait atteint sa longueur originelle, moyennant quoi l'augmentation de la longueur est effectuée en sortant la bielle de piston (7), présentant un petit diamètre, du cylindre de travail (5) ;
i. lors d'une chute suivante de la force jusqu'à la valeur zéro et en conservant la longueur originelle du dispositif, une réduction de la force antagoniste de celui-ci a lieu.

2. Dispositif d'élimination de l'énergie de choc, en particulier dans les embrayages automatiques de véhicules sur rails, comprenant un corps sous la forme d'une enveloppe fermée sur un côté à l'aide d'un fond, et une plaque de choc, qui est disposé de manière à pouvoir être déplacé en face du corps, ainsi qu'un absorbeur de chocs en élastomère disposé entre la plaque de choc et le fond du corps, **caractérisé en ce que** l'absorbeur de chocs en élastomère (4) comprend deux bielles de piston, présentant des diamètres différents, et disposées dans un cylindre de travail (5) commun, moyennant quoi la bielle de piston (7) présentant un petit diamètre est adjacente avec son extrémité au fond (3) du corps (1), et le fond (8) de l'absorbeur de chocs en élastomère (4) s'appuie contre 1 plaque de choc (9).
